# EUROPEAN PATENT APPLICATION

(11) **EP 2 129 076 A1**
(43) Date of publication of application: **02.12.2009**
(21) Application number: 08290500.1
(22) Date of filing: 30.05.2008
(51) Int. Cl.: H04L 29/06, H04L 29/08, G06F 21/00

(54) **Method for monitoring online contents accessed by a user of an internet service provider network, method for supervising the monitoring status of a user and related operator architecture, supervisor and user devices**

(71) Applicant: Alcatel Lucent, 75008 Paris (FR)
(72) Inventor: Martin, Anthony, 91620 Nozay (FR); Ansiaux, Arnaud, 91620 Nozay (FR)
(74) Representative: Croonenbroek, Thomas Jakob

(57) **Abstract**

The invention relates to a method and related equipment for monitoring online contents accessed by a user of a internet service provider network, including the following steps:
■ identifying a user when a user is connecting through a user device to online contents provided by a content provider network (101),
■ providing a pre-recorded user profile information (102) of said user,
■ monitoring online contents from said network accessed by said identified user (103),
■ calculating at least one indicative of correlation on the monitored online contents (104) in function of the pre-recorded user profile information,
■ comparing the indicative of correlation with at least one predetermined alert level (105),
■ setting the monitoring status of said user according to the comparison in an alert status if the indicative of correlation exceeds said at least one predetermined alert level (105),
■ sending said monitoring status and corresponding user identity at least to a supervisor device (106).

## Description

The invention relates to the field of monitoring online contents accessed by a user of an internet service provider network, a method for supervising the monitoring status of a user and related operator architecture, supervisor and user devices

Internet is undoubtedly and will remain for decades a major technology advance to communicate, to learn and to play.

However, Internet could be also considered as one of the most important dangers in particular for young people today.

Therefore parents try to protect their children against the dangers of the Internet in implementing parental control tools.

It turned out that even the best parental control tools are currently not efficient enough. Reasons therefore are the growing complexity and diversity of technologies used to access the Internet.

Thus, more and more in particular young people are unfortunately exposed to risks on the Internet concerning subject such as pedophilia, suicide, macabre game, anorexia, etc.

Many recent press articles and governmental / non governmental studies and analysis underline these risks.

For example, macabre websites are encouraging young people to commit criminal acts, and even giving them effective ways to do it, unbeknown to parents until police investigators delved into the family computer.

Anyone whose children use the Internet feels caught in a technology paradox. On the one hand, they know how important it is for children to experience new technologies and the wonderful benefits they offer.

On the other hand, parents are afraid of the dangers in cyberspace. In many cases, kids are more technologically advanced than adults, so some parents may feel intimidated and refrain from enforcing rules that are imperative to protect their children as they surf and socialize online.

New figures from the Internet Watch Foundation (IWF) 2006 Annual Report, launched 17 April 2007, show the severity of online child abuse content is increasing, with a four-fold rise in images depicting the most severe abuse.

All the governments are aware of this critical society problem but they are almost powerless in front this huge task which imposes to process a considerable amount of data and information.

A solution for governments today is to alert their citizen by making public communication and sensitizing them. In this goal, they usually work closely with different associations for child protection.

In France for example, in relation with the French government, the "E-Enfance" association launched an important national information campaign on the safety of children who use the Internet.

This association diffuses three sensational spots of sensitizing using television, movie theaters, mobile phone and on its web site.

The described issues are currently not totally addressed by any Operators, Internet Service Providers (ISPs) or Governments and no satisfying solutions are able to eliminate these risks.

The best existing solutions of this problem, to the knowledge of the inventors, are local implemented control parental tools.

Therefore, children protecting solutions are used such as web filters or Deep Packet Inspection (DPI) on Residential Gateways. Web filters are based on multiples principles as "White list", "Black list", semantically, text or image analysis. Some of these tools offer options to control the access on the Internet like connection time or duration and other ensure also a nondisclosure of the personal data.

The solutions are mainly provided by software providers and applied most of time on computers with particular operating systems.

These existing solutions are not good enough because:
- the most efficient solutions need the use of all different techniques and options and thus, require a high level of competencies to configure all the options (In many cases, children are often more technologically advanced than adults),
- they require competencies to understand and analyze complex reports which are still very technical and do not explain to which danger children are exposed,
- they are not enough reactive in front on new child usage of the Internet.

To conclude about the control parental tools, it is also important to underline the fact that they are still very limited, complex to administrate and static.

In general, they are also too much dedicated to a single access technology which does not correspond to the trend of the Internet usage. That is why those solutions can be designed around and become more and more useless. Moreover, with these existing solutions, it is not possible to have a global understanding of what end-user do across technologies/services because there is only correlation locally to one tool, not among various ones.

Finally, what it is also fundamental to keep in mind is the fact that parents shall have an important role to play against all these dangers.

Therefore, it is necessary to provide an innovative technical solution to help parents to protect their children against the high danger that the Internet could represent for them.

So, it is an object of the present invention to provide an efficient method helping parents to improve control children's access to network online contents and provide a new "child protection service" able to be furnished by Telecom Operators and/or Internet Service Providers (ISP) to address this society issue of protecting children when using the Internet. Thus parents could have efficient means and tools, whatever are underlying technologies used to access the Internet, avoiding dangers for their children when they used the Web.

In a first aspect of the present invention, this object is achieved by a method for monitoring online contents accessed by a user of an internet service provider network, including the following steps :
■ identifying a user when a user is connecting through a user device to online contents provided by a content provider network,
■ providing a pre-recorded user profile information of said user,
■ monitoring online contents accessed by said identified user,
■ calculating at least one indicative of correlation on the monitored online contents in function of the pre-recorded user profile information,
■ comparing the indicative of correlation with at least one predetermined alert level,
■ setting the monitoring status of said user according to the comparison in an alert status if the indicative of correlation exceeds said at least one predetermined alert level
■ sending said monitoring status and corresponding user identity at least to a supervisor device.

According to another aspect, the monitoring status of said user may be set in a safe status if the indicative of correlation is below said at least one predetermined alert level.

According to a further aspect of the invention, the step of sending said monitoring status is carried out at least in a case of change of the monitoring status of a corresponding user.

Furthermore, the method may include a further step of blocking access to online contents when the monitoring status of said user corresponds to an alert status.

With regard to another aspect of the invention, the pre-recorded user profile information is updated with the indicative of correlation and/or with off-line information.

Advantageously, the monitoring status may be set to an undeterminable status when an indicative of correlation cannot be calculated.

According to a development of the invention, the method includes a step of sending a request for acknowledgement of receipt to a supervisor device in case of change of the monitoring status to an alert status.

In the case where several supervisor devices are associated to one user device, the method may include an additional step of checking the online status of said associated supervisor devices and selecting at least one supervisor device having an online status for sending out said request for acknowledgement.

According to a further aspect, it is provided a method for supervising a monitoring status of a user accessing to online contents of an internet service provider network including the following steps :
- receiving a monitoring status and a corresponding user identity,
- displaying said monitoring status and corresponding identity of a user on a display of a supervisor device.

According to a further aspect, the method includes a step of generating a haptic, audible or visible alert when the monitoring status of said user changes to an alert status.

Moreover, the method may include further steps of receiving a request of acknowledgment in case of change of the monitoring status to an alert status, and sending out an acknowledgement.

The invention also relates to an operator architecture having at least one processing means adapted to
■ identify a user when a user is connecting through a user device to online contents provided by a content provider network,
■ provide a pre-recorded user profile information of said user,
■ monitor online contents from said content provider network accessed by said identified user,
■ calculate at least one indicative of correlation on the monitored online contents in function of the pre-recorded user profile information,
■ compare the indicative of correlation with at least one predetermined alert level,
■ set the monitoring status of said user according to the comparison in an alert status if the indicative of correlation exceeds said at least one predetermined alert level,
■ send said monitoring status and corresponding user identity at least to a supervisor device.

According to another aspect, said at least one processing means may be adapted to set the monitoring status of said user according to the comparison in a safe status if the indicative of correlation is below said at least one predetermined alert level.

Said at least one processing means may be further adapted to block access to online contents of said the user device when the monitoring status of said user corresponds to an alert status.

According to another feature, said at least one processing means are further adapted to update the pre-recorded user profile information with the indicative of correlation and/or with off-line information.

In addition, said at least one processing means may be further adapted to send a request for acknowledgement of receipt to a supervisor device in case of change of the monitoring status to an alert status.

In case several supervisor devices are associated to one user device, said at least one processing means are further adapted to check the online status of said associated supervisor devices and selecting at least one supervisor device having an online status for sending out said request for acknowledgement.

According to a further object, the invention relates to a supervisor communication device for supervising a monitoring status of a user accessing to online contents of a content provider network comprising at least one processing means being adapted to :
■ receive a monitoring status and a corresponding user identity, and
■ display said monitoring status and corresponding identity of a user on a display of a supervisor device.

Said at least one processing means of the supervisor communication device may be further adapted to generate a haptic, audible and / or visible alert when the monitoring status of said monitored user changes to an alert status.

According to another aspect, said at least one processing means are further adapted to receive a request of acknowledgment in case of change of the monitoring status to an alert status, and sending out an acknowledgement.

The invention relates also to a user device for displaying a monitoring status of a user accessing to online contents of a content provider network comprising at least one processing means being adapted to :
■ send out an identification of said user when connecting to online contents provided by the network,
■ receive a monitoring status and a corresponding user identity, and
■ display said monitoring status on a display of said user device.

Other features and advantages of the invention will become apparent from the following description and enclosed drawings.

For a better understanding of the invention with regard to the embodiments thereof, reference is made to the accompanying drawings, in which like numerals designate corresponding elements or sections throughout, and in which :
- figure 1 shows a synoptic graphics illustrating a general example of realization of a method according to the invention,
- figure 2 is a flowchart of the monitoring method according to the invention,
- figure 3 shows a synoptic diagram of a global architecture according to the invention, and
- figure 4 is a flowchart of the supervising method according to the invention.

As used herein, the term "online contents" refers to audio, video, graphics files, icons, software, text files and scripts, data, binary files and other computer-usable data.

As used herein, the term "operator architecture" refers to parts of a telecommunication network. It may be provided through the use of dedicated hardware as well as hardware capable of executing software in association with appropriate software. It can be a single dedicated processor, a single shared processor, or a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

It has also to be noted that the present invention can be used with any fixed or mobile telecommunication network whatever the network standard (WIMAX, 3G LTE, UMTS, GSM, GPRS, EDGE...) or transportation support (radio, fiber optics etc).

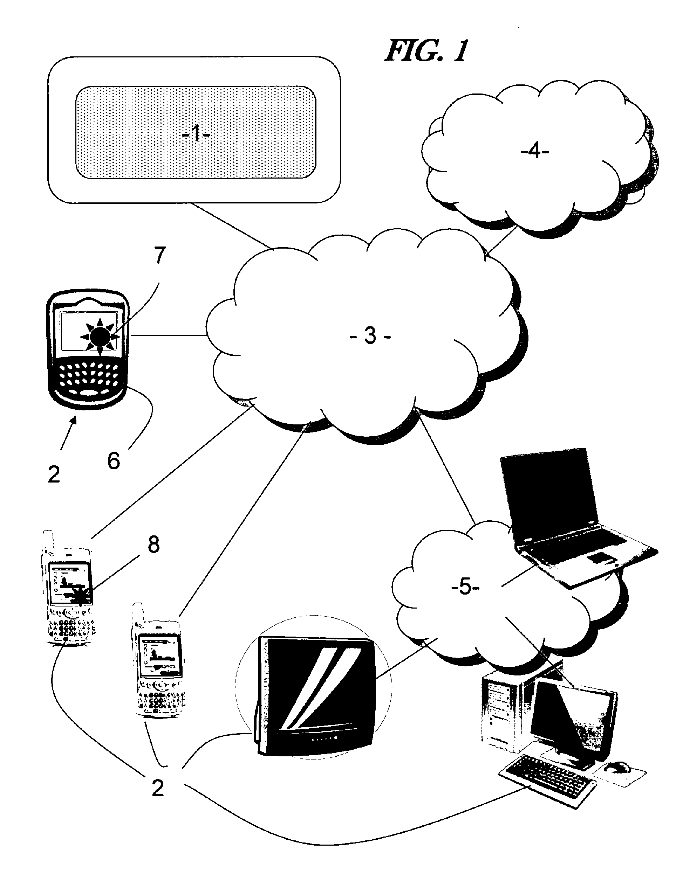

Referring now in particular to figure 1 that shows a synoptic graphics illustrating a general example of realization according to the invention.

In figure 1 it is shown an operator architecture 1 and user devices 2 that may access via an internet service provider network 3 to contents of a content provider network 4.

The operator architecture 1 may be an IMS (Internet Protocol Multimedia Subsystem) network architecture and comprises the service provider for a monitoring service. This operator architecture can be provided for example by a telecom operator or by an Internet service provider (ISP).

As it will be described more in detail hereafter, this operator architecture is configured to provide a method for monitoring online contents accessed by a user through the internet service provider network.

User devices 2 are for example user terminal devices such as computers, game consoles, cell phones, PDA's or televisions, fixed or mobiles having access to Internet or digital television online contents via a satellite, cable, or terrestrial network, located within a consumer's or user's premises and connected to the Internet service provider network 3 directly or indirectly via for example a home network 5.

The internet service provider network 3 and the content provider network 4 may be the same or different.

Such networks may be a fix, mobile or via satellite and based on any technology.

In the present example, it is assumed that at least one of the user devices is a supervisor device 6 that is associated to the other user devices 2 shown in figure 1 for supervising the monitoring status of at least a user accessing to online contents of the content provider network 4. As an example, the associated supervisor device 6 belongs to a parent while the user device (a computer, television or like) belongs to or is used by a child.

In the present application, the fact that the supervisor device is "associated" to one or more user devices means that this supervisor device should receive status of the monitored online content that is accessed by the users of the other user devices 2.

It can be appreciated that a user terminal may change automatically its status to a supervisor device when the user is identified as a supervisor (for example the father) or to a monitored user device when the user is identified as a user to be supervised as a child.

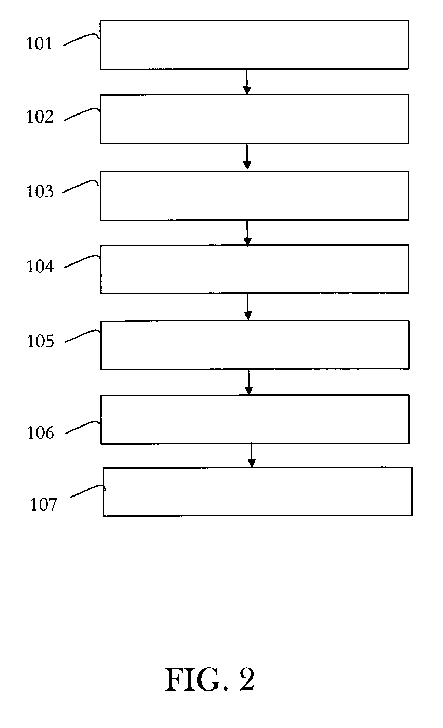

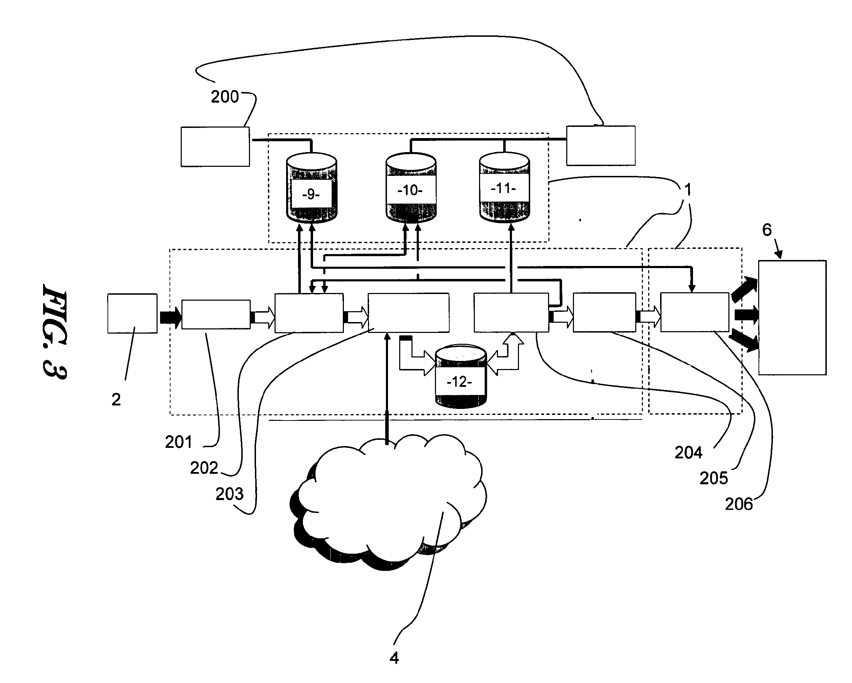

The invention will now be described in detail with respect to figure 2 and 3.

For initialization of the methods according to the invention, a supervisor, like a parent needs to subscribe to the service of the service provider and needs to furnish a certain amount of information to the service provider that is memorized in an off line step 100 in a data repository 9 containing profile information. This step 100 is carried out in an initialization module 200.

Such profile information contains data about for example first name, last name, birth date, login, list of user devices 2 to access the Internet, phone numbers, e-mail address, SIP address, about users they want to protect from unwanted contents, for example children.

It may be appreciated that the profiles may be adapted individually for example for all children of the family according to their respective ages and interests. It will contain data about categories of contents that are allowed to be accessed by a child and categories that are prohibited. Definition of such categories may be done in various ways, like for example lists of addresses of prohibited internet addresses, specific keywords or else.

Such profile information contains also data about the associated supervisor devices 6, in particular how the status and in particular the change of a status is communicated to a supervisor device.

It may also contain some additional information concerning availability of the supervisor. This may be interesting in case of several supervisor devices (father and mother) and can allow defining the priority to whom to send out first the change of monitoring status of a supervised child.

During this first off-line step 100, the operator could also assist the supervisor for defining the most valuable user profile information using their own knowledge and update information about new online user's risks.

Such personalized user profiles are then completed by the service provider who starts monitoring information from various user devices of the network 3, in particular from a Residential Gateway of the home network 5.

Once the profiles defined, the method according to the invention can start to monitor the online contents accessed by a user.

In a first step 101 carried out within an identification module 201, the user is identified when he is connecting through his user device 2 and the internet service providing network 3 to online contents provided by the content provider network 4. The identification is obtained by at least one information relating to the user device 2, such as his first or last name, birth date, e-mail address, a couple login/password, a unique hardware identifier of a handset (like MAC address (Media Access Control) or IMEI (International mobile Equipment Identity)) or a mobile telephone number.

In the next step 102, a pre-recorded user profile information about the user is provided in an action definition module. Such pre-recorded user profile information comprises above described off-line information provided for example by the parents from data repository 9 and completed by the operator or by the service provider for example from data repository 10 defining actions for collecting online contents or from a data repository 11 defining correlation rules.

It contains and defines in particular all actions that are prohibited or not to a specific user based on the dedicated profiles.

In a third step 103, online contents accessed by the identified user are monitored in a monitoring module 203.

In order to save network capacities and server capacities at the service provider, it may be advantageously that network online contents are monitored only when a user is accessing to unauthorized network online contents, where unauthorized means "not specifically authorized" and does not necessarily mean prohibited. The action that is "unauthorized" may be defined in the pre-recorded user profile information and even trigger the monitoring action.

The monitoring action is performed in collecting for example visited web sites, the frequency, keywords, files exchanged or people in touch with the user, mails, chat exchanges etc. The collected data is for example memorized in a data repository 12.

The collected and monitored online content is the basis in step 104 to calculate an indicative of correlation in an correlation and analysis module 204. The indicative of correlation has the function to find a relation between online contents, to make statistics, to enrich these online contents and to transform them into information to highlight a potential danger. As already described, the correlation rules are defined by the service provider in a specific data repository 11.

Then, this indicative of correlation is compared with predetermined alerts levels in a fifth step 105 which allows highlighting potential risks in a report dressing module 205.

More specifically, a monitoring status of said user according to the comparison is set in an alert status if the indicative of correlation exceeds said at least one predetermined alert level.

In step 106, said alerting monitoring status and corresponding user identity are sent to at least to a supervisor device 6 through an alert module 206. The online alert could be for example an email or a SMS displayed on the associated supervisor device 6.

According to a further aspect the monitoring status of said user according to the comparison is set in a safe status if the indicative of correlation is below said at least one predetermined alert level 105. Therefore, parents are informed in real time if their children are surfing on the Internet on authorized contents without any danger for them.

In a development, the online alert sent to the associated supervisor device can automatically call children and/or react by translating reports into specific scripted commands for user devices (Residential Gateway, computers, phones, etc.).

Thus, the method can be applied to all devices accessible by the identified user (not only on computers) with correlation between all network devices and with all online type of contents reached by the same user, including for example chat, blogs, P2P file sharing, virtual worlds for games. The method allows efficient protection for users of online contents by a centralized service whatever the technologies of access and whatever the data accessed.

Thus, this solution doesn't require any special level of competencies to configure options or to understand and analyze reports explaining clearly to which danger children are exposed.

The solution is not a local one associated with only one or two user devices, but a solution with correlation between all the Internet user devices and all online applications used on them by the same user.

The method can further comprise the step 107 of identifying the presence (for example in using a presence server of a mobile network) or connection status of a supervisor device 6 to be sure that the supervisor is alerted in time.

As an example, if two associated supervisor devices 6 are a cell phone and a computer and if the cell phone is online and the computer is offline, the monitoring status will be sent via an SMS on the cell phone, to increase the probability to be seen by the user of this associated control device.

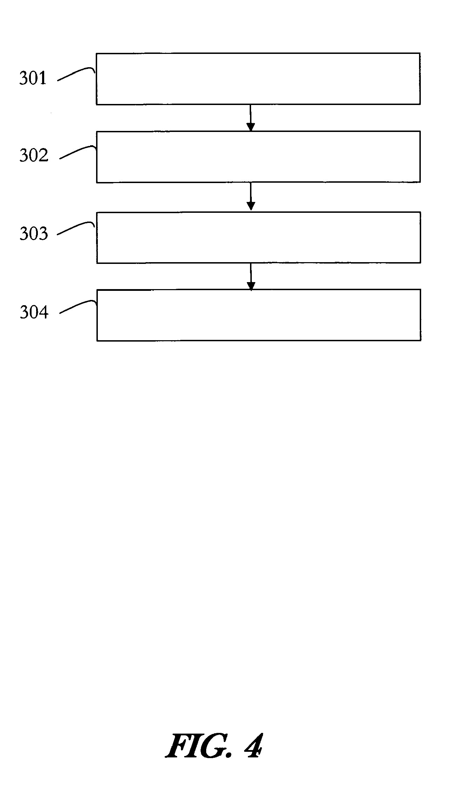

With reference to figure 4 and related to what has been previously described, it is also proposed a method for supervising a monitoring status of a user accessing to online contents of an internet service provider network. This method can be realized in a supervisor device 6 as described before.

This supervising method includes the step 300 of receiving by a supervisor device 6 a monitoring status and a corresponding user identity and displaying in a step 301 said monitoring status and corresponding identity of a user on a display of a supervisor device 6.

It may be advantageously to include a step 301 of generating a haptic, audible or visible alert when the monitoring status of said user changes to an alert status.

Moreover, the method may include further steps 302 of receiving a request of acknowledgment in case of change of the monitoring status to an alert status, and sending out in step 303 an acknowledgement to the operator architecture 1.

In a further embodiment of the invention, the online alert and a user identification are displayed both on the user device 2 (icon 8) and on the associated supervisor device 6 (icon 7). Thus, for example, both children and parents are at the same time informed about the fact that unauthorized networks online contents have been consulted. Moreover, several people accessing to online contents may be simultaneously informed.

It is also possible to block a user device 2 when an online alert corresponding to a predetermined alert level is generated, preventing thus the user to access such risky online contents.

For instance, if the activities are considered with low danger, a simple email should be enough to alert the control user. In the contrary, if the activities are considered with high danger, several communication means will be used like email, voice mail, SMS etc depending on the control user' reachability.

Preferably, the online alert displays an icon on at least the associated supervisor device 6 with a marker 7 corresponding to a predetermined alert level. The marker provides rapid, visual and comprehensive information, allowing parent to easily understand the situation without requiring any particular technological knowledge. If wanted, parent that have received the marker could contact the service provider to have explanations about the alert, what it is exactly about and why it seems important according to the predefined user profile. This may be for instance a call from a parent to the service provider: in this way, it maintains the simplicity of the method while proposing more information on demand.

For example, the marker has a particular color or shape corresponding to the level of the potential danger of the online contents accessed (see for example on figure 1 a blinking star 7 for an unauthorized access to online contents).

As a preferred embodiment, the marker is red when the actions are dangerous regarding the pre-recorded user profile information, orange when the danger can not be measured, and green when the actions are safe regarding the pre-recorded user profile information. The icon identifies the user that is concerned with an ID, for example the first name or the surname.

Advantageously, the calculating of the indicative of correlation takes into account an off-line database corresponding to the pre-recorded user profile information and online contents monitored.

Thus, data repositories 10 and 11 realized for example as databases are continuously refined and updated with contextual information such as current blogs or websites identified as potentially risked. Moreover, the pre-recorded user profile information could be adjusted with the indicative of correlation and/or off-line information.

Off-line information can be provided for example by the control users and completed by the operator or by the service provider to update the user's growth.

Thus, this method provides an efficient way to assure real-time protection for online contents accessible for users whatever the technology used to access the network.

For the user, the method brings a global efficient way to protect users when they use online content (like the Internet, IP TV etc), whatever technologies they use.

The solution will help control users, such parents, to have more confidence and increase their trust about the usage of new technologies and the Internet by their children.

It is a possibility to assure that the usage of the Internet is safe, without any dangers (immediate or at long term).

The icon is a visual and nominative solution that is simple, real time and easy to understand.

For the operator, the monitoring of online contents from networks can increase the return on investment for Lawful Interception (LI) solutions (i.e.: Deep Packet Inspection (DPI), data retention, data mining, etc) deployed inside the network imposed by government decisions and for traffic control and shaping probes use to apply Quality of Services QoS.

This service provider is a distinctive and valuable service for users, such as children security and safety. It helps leverage the best of the Internet without being always worried about the usage of it. It could then generate new significant incomes for operators.

The service provider is not dedicated to a single technology and/or device, which do not correspond to the convergence and new usage of the Internet; it provides a visual and nominative icon to all users devices to inform in real time both users and controls users about the potential danger, it is easy to use and to administrate, it gives an efficient help to parents by given them more confidence across new technologies.

## Claims

1. Method for monitoring online contents accessed by a user of a internet service provider network, including the following steps :
■ identifying a user when a user is connecting through a user device to online contents provided by a content provider network (101),
■ providing a pre-recorded user profile information (102) of said user,
■ monitoring online contents accessed by said identified user (103),
■ calculating at least one indicative of correlation on the monitored online contents (104) in function of the pre-recorded user profile information,
■ comparing the indicative of correlation with at least one predetermined alert level (105),
■ setting the monitoring status of said user according to the comparison in an alert status if the indicative of correlation exceeds said at least one predetermined alert level (105),
■ sending said monitoring status and corresponding user identity at least to a supervisor device (106).

2. Method for monitoring online contents accessed by a user of a internet service provider network, wherein the monitoring status of said user according to the comparison is set in a safe status if the indicative of correlation is below said at least one predetermined alert level (105).

3. Method according to claim 1, wherein the step of sending said monitoring status is carried out at least in a case of change of the monitoring status of a corresponding user.

4. Method according any of claims 1 to 3 including a further step of blocking access to online contents when the monitoring status of said user corresponds to an alert status.

5. Method according to any of claims 1 to 4 including the step of updating the pre-recorded user profile information with the indicative of correlation and/or with off-line information.

6. Method according any of claims 1 to 5, wherein the monitoring status is set to an undeterminable status when an indicative of correlation cannot be calculated.

7. Method according to any one of the previous claims, including a step of sending a request for acknowledgement of receipt to a supervisor device in case of change of the monitoring status to an alert status.

8. Method according to claim 7, wherein several supervisor devices are associated to one user device, including an additional step of checking the online status of said associated supervisor devices and selecting at least one supervisor device having an online status for sending out said request for acknowledgement.

9. Method for supervising a monitoring status of a user accessing to online contents of an internet service provider network including the following steps :
■ receiving a monitoring status and a corresponding user identity (300),
■ displaying said monitoring status and corresponding identity of a user on a display of a supervisor device (301).

10. Method according to claim 9, including a step (302) of generating a haptic, audible or visible alert when the monitoring status of said user changes to an alert status.

11. Method according to claim 9 or 10, including further steps of receiving (303) a request of acknowledgment in case of change of the monitoring status to an alert status, and sending out (304) an acknowledgement.

12. Operator architecture (1) having at least one processing means (200, 201, 202, 203, 204, 205, 206) adapted to
■ identify a user when a user is connecting through a user device (2) to online contents provided by a content provider network (4),
■ provide a pre-recorded user profile information of said user,
■ monitor online contents from said content provider network (4) accessed by said identified user,
■ calculate at least one indicative of correlation on the monitored online contents in function of the pre-recorded user profile information,
■ compare the indicative of correlation with at least one predetermined alert level,
■ set the monitoring status of said user according to the comparison in an alert status if the indicative of correlation exceeds said at least one predetermined alert level,
■ send said monitoring status and corresponding user identity at least to a supervisor device.

13. Operator architecture (1) according to claim 12, wherein said at least one processing means is adapted to set the monitoring status of said user according to the comparison in a safe status if the indicative of correlation is below said at least one predetermined alert level.

14. Operator architecture (1) according to claim 12 or 13 wherein said at least one processing means are further adapted to block access to online contents of said the user device when the monitoring status of said user corresponds to an alert status.

15. Operator architecture (1) according to any of claims 12 to 14, wherein said at least one processing means are further adapted to update the pre-recorded user profile information with the indicative of correlation and/or with off-line information.

16. Operator architecture (1) according to claim any of claims 12 to 15, wherein said at least one processing means are further adapted to send a request for acknowledgement of receipt to a supervisor device in case of change of the monitoring status to an alert status.

17. Operator architecture (1) according to claim any of claims 12 to 16, wherein several supervisor devices are associated to one user device and wherein said at least one processing means are further adapted to check the online status of said associated supervisor devices and selecting at least one supervisor device having an online status for sending out said request for acknowledgement.

18. Supervisor device (6) for supervising a monitoring status of a user accessing to online contents of a content provider network comprising at least one processing means being adapted to :
■ receive a monitoring status and a corresponding user identity, and
■ display said monitoring status and corresponding identity of a user on a display of a supervisor device.

19. Supervisor device (6) according to claim 18 wherein said at least one processing means are further adapted to generate a haptic, audible and / or visible alert when the monitoring status of said monitored user changes to an alert status.

20. Supervisor device (6) according to claim 18 or 19, wherein said at least one processing means are further adapted to receive a request of acknowledgment in case of change of the monitoring status to an alert status, and sending out an acknowledgement.

21. User device (2) for displaying a monitoring status of a user accessing to online contents of a network comprising at least one processing means being adapted to :
■ send out an identification of said user when connecting to online contents provided by the content provider network (4),
■ receive a monitoring status and a corresponding user identity, and
■ display said monitoring status on a display of said user device (2).
